# DEMANDE DE BREVET EUROPEEN

(11) **EP 1 050 823 A1**
(43) Date de publication de la demande: **08.11.2000**
(21) Numéro de dépôt: 00401146.6
(22) Date de dépôt: 26.04.2000
(51) Int. Cl.: G06F 13/38, G06F 13/40

(54) **Interface de réseau d'ordinateurs**

(30) Priorité: 28.04.1999 FR 9905381
(71) Demandeur: SAGEM SA, 75116 Paris (FR)
(72) Inventeur: Bailly, Francois, 75013 Paris (FR); Laban, Gérard, 75013 Paris (FR)
(74) Mandataire: Fruchard, Guy

(57) **Abrégé**

La terminaison numérique de réseau à sorties informatiques comporte une unité centrale (1) reliée à un bus d'entrée numérique (2) à un bus de sortie numérique (8) et à un module informatique de type point à point (13), un module informatique de type bus (19) relié au bus de sortie numérique (8), et un organe de basculement (20) disposé pour permettre une réutilisation de la liaison entre l'unité centrale (1) et le module informatique de type point à point (13) en vue d'établir une liaison entre l'unité centrale (1) et le module informatique de type bus (19) .

## Description

La présente invention concerne une terminaison numérique de réseau à sorties informatiques.

On connaît des terminaison numérique de réseau à sorties informatiques, qu'il s'agisse d'une terminaison numérique de réseau simple c'est-à-dire comportant seulement un bus de sortie numérique, ou d'une terminaison numérique de réseau généralisée c'est-à-dire comportant en outre une ou plusieurs sorties analogiques, comportant une unité centrale reliée à un bus d'entrée numérique, à un bus de sortie numérique et à un module informatique de type point à point, et un module informatique de type bus relié au bus de sortie numérique. Sur le bus de sortie numérique on dispose généralement de deux canaux de communication seulement et lorsqu'un ordinateur est relié au module informatique de type bus, ces deux canaux peuvent être utilisés pour la transmission des signaux informatiques proprement dits. Il n'est donc pas possible d'établir simultanément une liaison informatique et une communication téléphonique.

Selon l'invention, on prévoit une terminaison numérique de réseau du type mentionné ci-dessus comportant en outre un organe de basculement disposé pour permettre une interruption de la liaison entre l'unité centrale et le module informatique de type point à point et établir une liaison entre l'unité centrale et le module informatique de type bus.

La liaison ainsi établie sert de liaison de service entre le module informatique de type bus et l'unité centrale de sorte que la libération d'un canal de communication peut être commandée au module informatique et il est donc possible d'établir une communication téléphonique simultanément à une communication informatique.

Selon un autre aspect de l'invention le module informatique de type point à point est alimenté par le bus de sortie numérique par l'intermédiaire d'un organe de séparation de signaux. Ainsi, l'alimentation très basse tension de sécurité nécessaire à l'alimentation du module informatique de type point à point est assurée par le bus de sortie numérique de sorte que les modules informatiques peuvent être assemblés selon un module additionnel connectable à un module principal comprenant l'unité centrale sans qu'il soit nécessaire de prévoir un organe d'alimentation séparé sur le module additionnel.

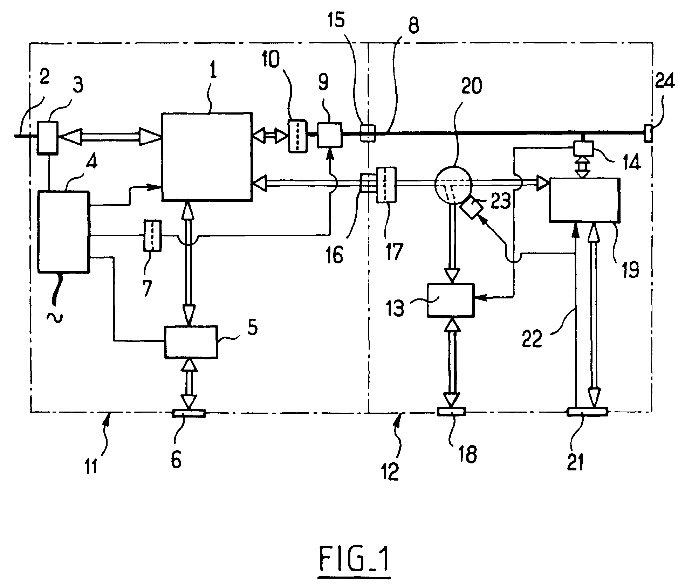

D'autres caractéristiques et avantages de l'invention apparaîtront à la lecture de la description qui suit d'un mode de réalisation particulier non limitatif de l'invention, en relation avec la figure unique ci-jointe qui est une représentation schématique de la terminaison numérique de réseau à sortie informatique selon l'invention.

En référence à la figure, la terminaison numérique de réseau, ici une terminaison numérique de réseau généralisée, comporte une unité centrale 1 reliée à un bus d'entrée numérique 2 par l'intermédiaire d'un organe de séparation de signaux 3 permettant de séparer d'une façon connue en soi les signaux de communication numérique, représentés sur la figure par une double flèche, de la tension d'alimentation fournie par le bus d'entrée numérique et dirigée vers un module d'alimentation 4 par une ligne représentée par un trait simple sur la figure.

Le module d'alimentation 4 est également relié au secteur et alimente en basse tension l'unité centrale 1 ainsi qu'un module de sortie analogique 5 relié à une borne de sortie analogique 6. Le module d'alimentation 4 sert également à alimenter par l'intermédiaire d'un organe d'isolation galvanique abaisseur de tension 7, par exemple un transformateur ou un opto-coupleur associé à un circuit abaisseur de tension, un bus de sortie numérique 8 relié à l'unité centrale 1 par l'intermédiaire d'un mélangeur 9 qui assure une combinaison des signaux de communication venant de l'unité centrale 1 avec la très basse tension de sécurité venant du module d'alimentation 4. Le mélangeur 9 est séparé de l'unité centrale 1 par un organe d'isolation galvanique 10.

Selon l'invention les composants qui viennent d'être énumérés sont assemblés selon un module principal 11 délimité par un trait mixte sur la figure. Le module ainsi défini peut servir à établir une communication téléphonique en branchant un poste téléphonique numérique sur le bus de sortie numérique.

Selon l'invention, des modules informatiques sont assemblés selon un module additionnel 12 connectable au module principal 11 comprenant l'unité centrale 1. La continuité du bus de sortie numérique 8 entre le module principal 11 et le module additionnel 12 est assurée par un organe de connexion 15. Le module additionnel 12 comporte un module informatique 13 de type point à point tel qu'un module informatique dénommé module V24 ou V28, alimenté en très basse tension de sécurité par un séparateur 14 relié au bus de sortie numérique 8. Les signaux de communication informatique sont fournis au module informatique point à point 13 par une liaison avec l'unité centrale 1 par l'intermédiaire d'un organe de connexion 16 auquel est associé un organe d'isolation galvanique 17.

Le module informatique de type point à point 13 est relié à une borne de sortie informatique point à point 18 sur laquelle un ordinateur peut être branché.

Le module additionnel 12 comporte en outre un module informatique de type bus 19, tel qu'un module généralement dénommé module USB, relié d'une part au séparateur de signaux 14 pour recevoir des signaux de communication informatique provenant du bus de sortie numérique 8, et d'autre part à l'unité centrale 1 par l'intermédiaire d'un organe de basculement 20 disposé pour permettre une réutilisation de la liaison entre l'unité centrale 1 et le module informatique de type point à point 13 en vue d'établir une liaison entre l'unité centrale 1 et le module informatique de type bus 19. Le module informatique de type bus 19 est relié à une borne de sortie correspondante 21 à laquelle est associée une ligne d'alimentation 22 destinée à alimenter le module informatique 19 selon une liaison connue en soi à partir d'un ordinateur relié à la borne 21. La ligne d'alimentation 22 est également reliée à un organe de commande 23 de l'organe de basculement 20 pour provoquer le basculement vers la liaison entre l'unité centrale 1 et le module informatique 19 lorsque celui-ci est alimenté.

Le module additionnel 12 comporte également une borne 24 reliée au bus de sortie numérique 8 pour permettre le branchement d'un module supplémentaire.

Bien entendu, l'invention n'est pas limitée au mode de réalisation décrit et pourra faire l'objet de modifications sans sortir du cadre de l'invention tel que défini par les revendications.

En particulier, bien que le terminal selon l'invention ait été illustré avec un module informatique point à point 13 alimenté par le séparateur 14, on pourra prévoir d'alimenter le module informatique 13 par une dérivation dans le module principal 11 sur la ligne d'alimentation du bus de sortie numérique 8. Dans ce cas il sera toutefois nécessaire de prévoir un organe de connexion supplémentaire entre le module principal 11 et le module additionnel 12.

Bien que l'invention ait été décrite sous forme d'un terminal comportant un module principal et un module additionnel, ce qui permet de réduire le coût dans le cas d'un utilisateur non intéressé par le module additionnel, l'invention peut également être réalisée sous forme d'une terminaison en une seule pièce.

## Revendications

1. Terminaison numérique de réseau à sorties informatiques comportant une unité centrale (1) reliée à un bus d'entrée numérique (2), à un bus de sortie numérique (8) et à un module informatique de type point à point (13), et un module informatique de type bus (19) relié au bus de sortie numérique (8), caractérisée en ce qu'il comporte un organe de basculement (20) disposé pour permettre une réutilisation de la liaison entre l'unité centrale (1) et le module informatique de type point à point (13) en vue d'établir une liaison entre l'unité centrale (1) et le module informatique de type bus (19).

2. Terminaison selon la revendication 1, caractérisée en ce que la liaison entre l'unité centrale (1) et les modules informatiques (13, 18) comporte un organe d'isolation galvanique très basse tension de sécurité (17).

3. Terminaison selon la revendication 1 ou la revendication 2, caractérisée en ce que le module informatique de type point à point (13) est alimenté par le bus de sortie numérique (8) par l'intermédiaire d'un organe de séparation de signaux (14).

4. Terminaison selon la revendication 1 ou la revendication 2, caractérisée en ce que le module informatique de type point à point est almimenté par le bus d'entrée par l'intermédiaire d'un organe de séparation de signaux (3) associé à un organe d'isolation galvanique très basse tension de sécurité.

5. Terminaison selon l'une des revendications 1 à 4, caractérisée en ce que les modules informatiques (13, 19) sont assemblés selon un module additionnel (12) connectable à un module principal (11) comprenant l'unité centrale (1).
